## Europäisches Patentamt

## European Patent Office

## Office européen des brevets

(19)

(11) Publication number: **0 148 862
B1**

(12) # EUROPEAN PATENT SPECIFICATION

(45) Date of publication of patent specification: **24.08.88**

(21) Application number: **84902280.1**

(22) Date of filing: **21.05.84**

(86) International application number:
**PCT/US84/00774**

(87) International publication number:
**WO 85/00703 14.02.85 Gazette 85/04**

(51) Int. Cl.⁴: **H 02 K 9/00,** H 02 K 9/26,
B 01 D 45/00

(54) HIGH SPEED GENERATOR ROTOR OIL PATH AIR VENT.

(30) Priority: **15.07.83 US 514295**

(43) Date of publication of application:
**24.07.85 Bulletin 85/30**

(45) Publication of the grant of the patent:
**24.08.88 Bulletin 88/34**

(84) Designated Contracting States:
**FR**

(56) References cited:
DE-A-2 331 357
DE-B-1 133 814
GB-A- 257 974
SU-A- 322 209
US-A-3 240 967
US-A-3 318 253
US-A-3 922 573
US-A-4 082 967
US-A-4 137 472
US-A-4 376 902
US-A-4 380 712

(73) Proprietor: **SUNDSTRAND CORPORATION
4751 Harrison Avenue P.O. Box 7003
Rockford, Illinois 61125 (US)**

(72) Inventor: **WEFEL, Jerry, D.
2375 Mariposa Drive
Rockford, IL 61108 (US)**

(74) Representative: **Marshall, John Grahame et al
SERJEANTS 25 The Crescent King Street
Leicester LE1 6RX (GB)**

Courier Press, Leamington Spa, England.

## Description

### Technical Field

This invention relates to rotary electric machines, and more specifically, rotary electric machines having liquid cooled rotors according to the precharacterising part of claim 1. Such a machine is disclosed in GB—A—257 974.

### Background Art

In order to maximize the capacity of various rotary electric machines as, for example, generators, it is desirable to provide liquid cooling for various components such as winding. In many instances, this does not pose a particular problem. However, in the case of rotary electric machines having rotor windings requiring cooling, a problem may occur in view of the fact that the coolant, frequently oil, seldom is totally free from entrained gases such as air, and the further fact that the coolant passages are displaced from the rotational axis of the rotor.

As a consequence, during operation of the machine, the more dense oil tends to collect in the high centrifugal force field spaced from the rotational axis of the rotor while the less dense air collects in the low centrifugal force area surrounding the rotational axis of the rotor.

Since the coolant is typically introduced into the rotor by a rotary coupling located coaxial with the axis of rotation of the rotor, the air bubble located on the axis of rotation may impede or halt proper flow of the coolant to the coolant passages displaced therefrom with the undesirable result of winding overheating.

The present invention is directed to overcoming one or more of the above problems.

### Summary of the Invention

The invention provides a rotary electric machine, comprising in combination:

a stator;

a rotor having a core journalled for rotation relative to the stator about an axis of rotation electrical windings carried by the rotor;

a fluid inlet on the rotor;

a fluid outlet on the rotor spaced from the fluid inlet;

a liquid flow path through the rotor interconnecting the inlet and the outlet and in heat exchange relation to the windings, the liquid flow path including passages extending through the core of the rotor and radially spaced from the axis of rotation thereof;

characterised in that a gas vent passage in the rotor interconnects the inlet and the outlet and is located substantially on the axis of rotation. The gas vent passage in the rotor acts to prevent the build-up of an air bubble on the axis of rotation of the rotor that might impede the flow of coolant to coolant passages.

In a highly preferred embodiment, the vent passage is sized to prevent substantial flow of a liquid to thereby prevent bypassing of the liquid flow path due to undesirable coolant flow through the vent passage.

The invention contempates that the inlet includes a chamber with a filter disposed in the chamber along with generally radially oriented entrance and exit ports for the chamber, the exit ports connecting to both the gas vent passage and the liquid flow path.

Other objects and advantage will become apparent from the following specification taken in connection with the accompanying drawings.

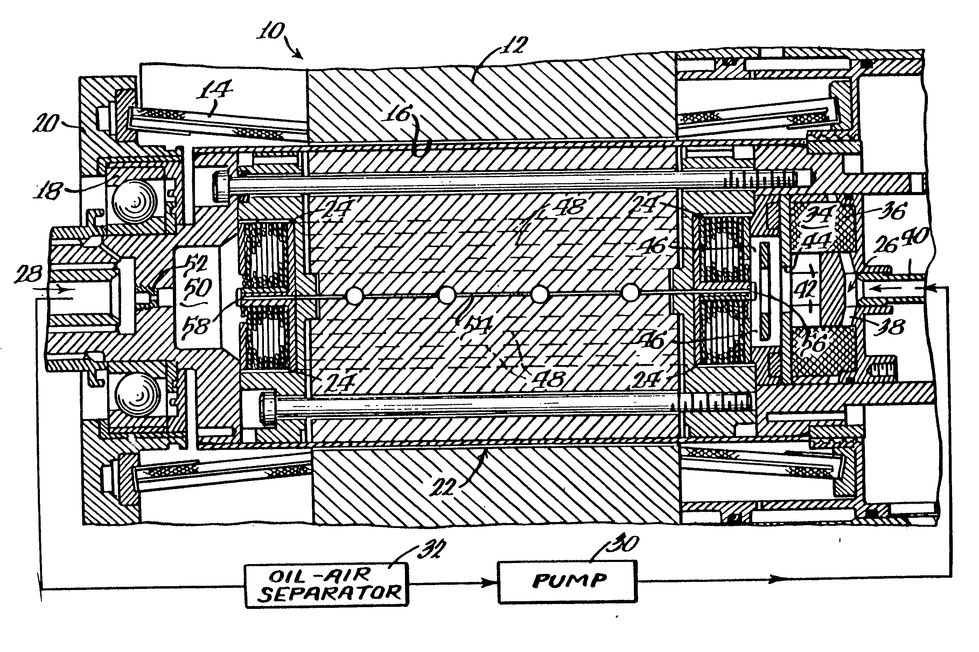

### Brief Description of the Drawing

The Figure is a sectional view of a rotary electric machine, specifically a high speed alternator, made according to the invention with certain components shown in somewhat schematic form.

### Best Mode for Carrying Out the Invention

An exemplary embodiment of a rotary electric machine made according to the invention is illustrated in the drawing in the form of a high speed alternator. However, it should be understood that the invention can be employed with efficacy in other types of rotary electric machines wherein rotor cooling by a liquid coolant which may entrain gases is employed. The rotary electric machine includes a stator armature, generally designated 10, having a steel core 12, windings 14, and a rotor/stator air gap 16. Bearings such as those shown at 18 mounted on a housing component 20 serve to journal a rotor, generally designated 22, for rotation relative to the stator 10 within the gap 16 for rotation about the rotor axis.

In the particular form of the machine illustrated, the alternator is of the so-called brushless variety and includes windings 24 extending from end to end of the rotor 22 as illustrated. The windings receive a direct current to generate a magnetic field which in turn rotates upon rotation of the rotor to induce current in the windings 14 of the stator 10.

The rotor includes fluid inlet, generally designated 26, on one end and a fluid outlet, generally designated 28, on the opposite end. A fluid system including a pump 30 and an air-oil separator 32 if desired recirculate the liquid coolant from the outlet 28 to the inlet 26. A heat exchanger (not shown) for cooling the coolant may also be employed.

The inlet 26 includes a chamber 34 within the rotor. A centrifugal filter 36 is disposed in the radially outer part of the chamber 34. Generally radially extending entrance ports 38 interconnect the chamber 34 and the exit end of a tube 40 connected to the pump 30 by means including a rotary coupling.

Axially inwardly of the ports 38, the chamber 34 opens radially inwardly in exit ports 42 to a centrally apertured plate 44, the aperture in the plate 44 being concentric with the rotational axis of the rotor 22.

Radial passages 46 extend generally radially outwardly from the rotational axis to allow liquid to flow into heat exchange relationship with the end turns of the windings 24 and through passages 48 extending axially along the rotor to the opposite end turns whereat the coolant may emerge in a central chamber 50 concentric about the rotational axis of the rotor 22. A flow path including an orifice 52 interconnects the chamber 50 with the outlet 28.

As noted previously, the difference in densities between the coolant, usually oil, and gas, usually air entrained therein tends to cause the more dense oil to migrate to radially outer portions of the flow paths due to centrifugal force during operation of the machine whereas the air tends to collect on the rotational axis of the rotor during such operation. As can be readily appreciated from a consideration of the Fig., if the air bubble becomes sufficiently large, it can impede the flow of the liquid coolant to the windings 24 and the coolant passages 48. In order to prevent such an occurrence, an air vent passage 54 extends axially through the rotor 22 along the rotational axis thereof. The air vent passage 54 has an entrance 56 in fluid communication with the inlet 26, and specifically, at the radially inner extent of the passages 46 on the rotational axis of the rotor 22. Similarly, the vent passage 54 is provided with an outlet 58 to the chamber 50 and also located on the rotational axis of the rotor 22. As a consequence of this construction, the pressure of incoming coolant at the inlet 26 will drive any forming air bubble into the inlet 56 to the vent passage and along the same to exit into the chamber 50 and be removed therefrom via the outlet 28. At the same time, the incoming liquid coolant, due to centrifugal force and the difference in densities, will drive any air in the chamber 36 radially inwardly toward the rotational axis and will spill over through the aperture plate 44 into the passages 46 to then flow through the passages 48 for the coolant and perform the desired cooling action.

In order to prevent any bypassing of the coolant passages 48 via the vent passage 54, the same has a cross sectional dimension that is but a minor fraction of the cross sectional dimension of the flow paths 48.

In the usual case, of the total flow of fluid, no more than about 10% will be entrained air. By using conventional compressible fluid flow calculations, the cross sectional dimension of the vent passage 54 may be determined. As a general practice, it should be chosen so that it will always be able to convey the maximum expected amount of entrained gas in the fluid being circulated and no more.

From the foregoing, it will be appreciated that a rotary electric machine made according to the invention eliminates the difficulties heretofore encountered when attempts have been made to cool rotor components in rotary electric machines by the flow of a coolant through the rotor. The unique construction assures that small contaminating particles in the coolant are adequately filtered so as to prevent ultimate clogging of coolant passages and yet assures adequate venting of air to prevent winding overheating.

## Claims

1. A rotary electric machine, comprising in combination:
a stator (12);
a rotor (22) having a core journalled for rotation relative to the stator (12) about an axis of rotation;
electric windings (24) carried by the rotor (22);
a fluid inlet (26) on the rotor (22);
a fluid outlet (28) on the rotor (22) spaced from the fluid inlet (26);
a liquid flow path through the rotor (22) interconnecting the inlet (26) and the outlet (28) and in heat exchange relation to the windings (24), the liquid flow path including passages (48) extending through the core of the rotor (22) and radially spaced from the axis of rotation thereof;
characterised in that a gas vent passage (54) in the rotor (22) interconnects the inlet (26) and the outlet (28) and is located substantially on the axis of rotation.

2. A rotary electric machine according to claim 1, wherein the gas vent passage (54) is sized to prevent substantial flow of a liquid therethrough thereby to prevent bypassing of the liquid flow path (48).

3. A rotary electric machine according to claim 1 or claim 2, wherein the inlet (26) includes a chamber (34), a filter (36) disposed in the chamber (34), and generally radially oriented entrance and exit ports (38, 42) for the chamber (34).

## Patentansprüche

1. Elektrische Rotationsmaschine bestehend aus folgenden miteinander in Verbindung stehenden Teilen:
— einem Stator (12);
— einem Rotor (22) mit einem drehgelagerten, sich relativ zum Stator (12) um eine Drehachse drehenden Kern;
— vom Rotor (22) getragenen elektrischen Wicklungen (24);
— einem am Rotor (22) befindlichen Flüssigkeitseinlaß (26);
— einem am Rotor (22) befindlichen und im Abstand vom Flüssigkeitseinlaß (26) angeordneten Flüssigkeitsauslaß (28);
— einem durch den Rotor (22) hindurchführenden, den Einlaß (26) und den Auslaß (28) miteinander verbindenden und mit den Wicklungen (24) in wäremeaustauschender Verbindung stehenden Flüssigkeitsströmungsweg, gebildet aus sich durch den Kern des Rotors (22) erstreckenden und von dessen Rotationsachse radial im Abstand angeordneten Verbindungswegen (48);
gekennzeichnet dadurch, daß ein im Rotor (22) befindlicher Gasabzugsweg (54) den Einlaß (26) mit dem Auslaß (28) verbindet und im wesentlichen auf der Rotationsachse angeordnet ist.

2. Elektrische Rotationsmaschine nach Anspruch 1, bei der der Gasabzugsweg (54) in seiner Größe so ausgelegt ist, daß durch ihn keine größeren Flüssigkeitsmengen hindurchströmen können, wodurch ein Umgehen des Flüssigkeitsströmungsweges (48) verhindert wird.

3. Elektrische Rotationsmaschine nach Anspruch 1 oder 2, bei der der Einlaß (26) eine Kammer (34) mit darin angeordnetem Filter (36) sowie im wesentlichen radial ausgerichtete Kammereinlaß- und Kammerauslaßöffnungen (38, 42) aufweist.

**Revendications**

1. Machine électrique tournante, comprenant en combinaison:
un stator (12);
un rotor (22) ayant un noyau monté de façon à tourner sur des tourillons par rapport au stator (12) autour d'un axe de rotation;
des enroulements électriques (24) portés par le rotor (22);
une entrée de fluide (26) sur le rotor (22);
une sortie de fluide (28) sur le rotor (22), espacée de l'entrée de fluide (26);

un circuit d'écoulement de liquide à travers le rotor (22) faisant communiquer l'entrée (26) et la sortie (28) et en relation d'échange de chaleur avec les enroulements (24), le circuit d'écoulement de fluide comprenant des passages (48) s'étendant à travers le noyau du rotor (22) et espacés radialement de son axe de rotation;
caractérisé en ce qu'un passage (54) d'évacuation de gaz situé dans le rotor (22) fait communiquer l'entrée (26) ou la sortie (28) et est disposé sensiblement sur l'axe de rotation.

2. Machine électrique tournante selon la revendication 1, dans laquelle le passage (54) d'évacuation de gaz est dimensionné de façon à s'opposer à tout écoulement important de liquide pour empêcher ainsi les contournements du circuit (48) d'écoulement de liquide.

3. Machine électrique tournante selon la revendication 1 ou la revendication 2, dans laquelle l'entrée (26) comprend une chambre (34), un filtre (36) disposé dans la chambre (34) et des orifices d'entrée et de sortie (38, 42), orientés globalement radialement, pour la chambre (34).

OIL-AIR
SEPARATOR

PUMP

0 148 862